(19) Europäisches Patentamt
European Patent Office
Office européen des brevets

(11) Publication number: 0 219 878 A2

(12) # EUROPEAN PATENT APPLICATION

(21) Application number: 86114788.2

(22) Date of filing: 24.10.86

(51) Int. Cl.[4]: B 01 D 13/04
B 01 D 53/22

(30) Priority: 24.10.85 US 791037

(43) Date of publication of application:
29.04.87 Bulletin 87/18

(84) Designated Contracting States:
CH DE FR GB IT LI

(71) Applicant: E.I. DU PONT DE NEMOURS AND COMPANY
1007 Market Street
Wilmington Delaware 19898(US)

(72) Inventor: Manos, Philip
215 Waverly Road
Wilmington Delaware 19803(US)

(74) Representative: Abitz, Walter, Dr.-Ing. et al,
Abitz, Morf, Gritschneder, Freiherr von Wittgenstein
Postfach 86 01 09
D-8000 München 86(DE)

(54) **Gas separation process and membrane.**

(57) A polyaramide asymmetric membrane useful in separating mixtures of gases is disclosed. The polyaramide contains repeating units of the formula

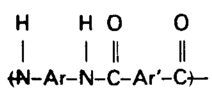

wherein Ar is

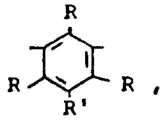 , 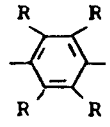 , or

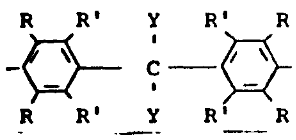

wherein R is

am alkyl group of 1 to 3 carbon atoms and -R' is R or -H, and Ar' is

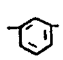 or 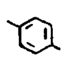

or mixtures thereof.

TITLE

# GAS SEPARATION PROCESS AND MEMBRANE

## BACKGROUND OF THE INVENTION

### Field of the Invention

The present invention relates to a polysubstituted aromatic polyamide membrane and the separation of gases using such membrane.

### Prior Art

U.S. 3,567,632 discloses asymmetric reverse osmosis membranes made from aromatic polyamides and polyhydrazides.

U.S. 4,080,743; U.S. 4,080,744 and U.S. 4,120,098 disclose separating gases using asymmetric aromatic polyamide membranes which have been dehydrated by special processes.

U.S. 3,878,109 discloses certain aromatic polyamides for use in reverse osmosis membranes.

U.S. 4,217,227 discloses reverse osmosis membranes made from aromatic copolyamides.

## SUMMARY OF THE INVENTION

The present invention relates to polyaramide membranes for separating gases in which the diamine used to form the polyaramide is polysubstituted with lower alkyl groups on the carbon atoms of the aromatic ring adjacent to the amino substituents and the process of separating gases with such a membrane.

### Detailed Description

While previously used aromatic polyamide membranes are capable of producing high purity hydrogen or carbon dioxide from their respective mixtures with hydrocarbons, permeabilities of typical membranes to hydrogen, and particularly carbon dioxide, are generally low. I have discovered that this is because such previous membranes involve mostly unsubstituted or partially substituted

)-5471

polyamides which have little free molecular volume due to close chain packing upon fabrication.

The present invention overcomes the above shortcoming and provides very high-flux membranes using self supporting aromatic-polyamide membranes containing repeating units of the structure

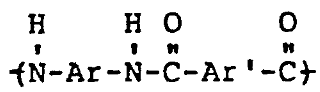

where -Ar- is 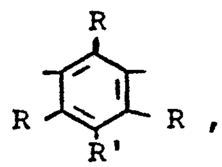 , 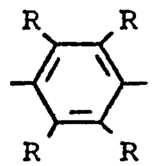

or 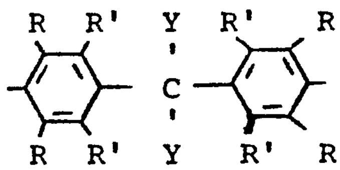 where the -Rs are independently alkyl groups of 1 to 3 carbon atoms, -R' is -R or -H, and Y- is -H, $-CH_3$ or $-CF_3$, and where -Ar'- is 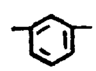 or 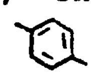 or preferably mixtures thereof containing 50 to 80 wt. % meta and 50 to 20 wt. % para.

Multiple substitution in the above illustrated structures sterically restricts free rotation and makes difficult close chain packing, thus insuring appreciable molecular free volume and, consequently, enhancing permeation of certain gases, such as hydrogen, helium, and carbon dioxide.

Steric inhibition of tight chain packing in polyamides of this invention is so effective that its beneficial effects on gas permeabilities extends even to physical blends of such polymers with substantial amounts of unsubstituted polyamides. In fact, membranes from polysubstituted polyamides and membranes from their blends with unsubstituted polyamides in 50:50 weight ratios were found, unexpectedly, to have virtually identical permeation properties.

Generally the blends should contain at least 40% by weight of the polyamide containing repeating units of the structure

$$-\!\!\left(\overset{H}{\underset{}{N}}-Ar-\overset{H}{N}-\overset{O}{\overset{\|}{C}}-Ar'-\overset{O}{\overset{\|}{C}}\right)\!\!-$$

where Ar and Ar' have the meanings defined above and up to 60% by weight of other aromatic polyamides. Further copolymers where up to 60 mole percent of Ar' is replaced by less substituted phenylene groups have been found to exhibit the advantages of the present invention.

Another benefit resulting from multiple substitution, and increased molecular free volume, is the ease with which water-wet membranes from polyamides of this invention can be dehydrated while retaining their highly asymmetric porous structure. Whereas membranes from unsubstituted polyamides must be dried by the rather laborious solvent exchange process described by Manos (U.S. 4,080,743, 4,080,744, 4,120,098), membranes from polysubstituted polyaramides can be dried by the much simpler dehydration process described by Manos for cellulose acetate membranes in U.S. Patent 4,068,387.

Another advantage yet of the polyamides of this invention is their exceptional resistance to hydrolysis by acids and bases, virtually in the entire pH range, resulting from steric protection of all amide linkages in the polymer chain. This property is quite important in applications where gas streams are contaminated with acidic or basic components, or in reverse osmosis applications involving acidic or basic waters. Generally the polyamide membrane is formed by casting a solution of the aromatic polyamide in a polar organic solvent,

such as dimethylacetamide, onto a casting surface or support fabric, evaporating some of the surface of the resulting layer of aromatic polyamide and then quenching with water. The casting solution generally will contain from 15 to 30 wt. % aromatic polyamide. The casting solution also contains a modifying salt. Suitable modifying salts include lithium nitrate, lithium chloride and hydrated magnesium chloride. The modifying salt should be present in an amount of from 20-60 wt. %, based on the aromatic polyamide.

If a fabric support is used in forming aromatic cast membrane for use in the process of the present invention, it generally will be a woven or non-woven unsized polyester or aromatic polyamide fabric. Suitable polyesters are disclosed in Whinfield, U.S. 2,465,319. Suitable aromatic polyamides are disclosed in Sweeny, U.S. 3,287,324.

Generally, the aromatic polyamide solution is cast or extruded at from 0° to 125°C and preferably 15° to 35°C. The range of 15° to 35°C represents ambient temperature and is preferred because of simplicity. The pre-membrane as extruded generally will have a thickness of from 1 to 10 mils, ($2.5 \times 10^{-5}$m - $2.5 \times 10^{-4}$m). After being cast or extruded the pre-membrane is partially dried. The drying is done at 50° to 170°C with from 80 to 150°C being preferred. The drying should be done to the extent necessary to leave from 30 to 50 wt. % aromatic polyamide in the pre-membrane.

After the partial drying step, the pre-membrane is quenched with water. The quench water should be at from 0° to 30°C and preferably 10° to 25°C. Generally, the quenching step will last one or two minutes. While longer quench times can be used they offer no improvement over the quench effect

obtained after a few minutes. In fact the membrane is normally stored in water at ambient temperature until it is dried. The quench step serves to gel the polymer and freeze in its structure as well as to extract residual solvent and modifying salt.

The membranes of the present invention are from 1 to 10 mils ($2.54 \times 10^{-5}$m - $2.54 \times 10^{-4}$m) in thickness and have densities of from 0.5 to 0.8 g/cc.

The membranes of the present invention are anisotropic. That is they are denser on the side from which the solvent has been evaporated during their preparation. This anisotropic nature can be determined using a scanning electron micrograph or a transmission electron micrograph.

The membranes of the present invention can be flat films or tubular in nature. Tubular membranes are formed by casting the aromatic dope on a preformed tubular support followed by performing the remaining process steps disclosed herein.

Simply drying the membrane by evaporating the water associated therewith can have a deleterious effect on the gas separation properties of the membrane. Thus the membrane should be dried by a technique other than simply evaporating the water. Generally this is done by replacing the water with an organic liquid while maintaining both the water and the organic liquid in the liquid phase.

## EXAMPLES

### Example 1

An aromatic polyamide was prepared by polycondensation of 2,4-diamino-mesitylene (DAM) with a 70/30 weight mixture of isophthaloyl/terephthaloyl chloride (IT). Asymmetric flat membranes from this polymer, were prepared as described in U.S.

3,567,632. Films of this example were cast from a 15% polymer solution in dimethylacetamide containing 30% lithium nitrate, based on polymer weight, by exposing a 15 mil layer of casting solution to air while on a hot plate at 100°C for 3 minutes, followed by quenching at ambient temperature in stirred distilled water. The water-wet films were dehydrated by fastening around a perforated stainless steel cylinder and submersion in 1,1,2-trifluoro-1,2-dichloroethane (FREON® 123) with a cheesecloth bag containing molecular sieves inserted in the perforated cylinder. The container was closed tightly and allowed to remain at ambient temperatures for 2 days. The membranes were then removed, vacuum dried and tested for single gas $CO_2$ and methane permeabilities at 400 psig, 25°C. A section of the dried membrane was mounted in a minipermeator module having an inlet in communication with the side of the membrane which had been exposed to the air at 100°C, and an outlet in communication with the opposite side of the membrane. The permeator was tested for the gases reported in this and the following Examples by feeding the gas or gas mixture through the permeator at 400 psig ($27.6 \times 10^5$ Pa) at 25°C and measuring its output as cubic centimeters per second. Measurement of permeate volume involved timing the displacement of a soap bubble in a 10 ml burette. The analysis of relative amounts of mixed gases in the outlet was done by gas chromatography. The results are reported below.

| | |
|---|---|
| $CO_2$ permeability: | 50 microHoehn |
| $CH_4$ permeability: | 2.7 microHoehn |
| $CO_2/CH_4$ selectivity: | 18 |

A microhoehn is the number of cubic centimeters passed by the membrane at standard temperature and

pressure times $10^6$ divided by the area of the membrane in square centimeters X the time in seconds X the pressure on the product side of the membrane in mmHg i.e.

$$\text{microhoehn} = \frac{cm^3 \text{ (STP)}}{cm^2 \cdot \text{sec (cm } 1^+ g) \times 10^6}$$

Example 2

Example 1 was repeated except the dimethylacetamide casting solution contained 50% $LiNO_2$, based on polymer. All other conditions were the same as in Example 1. Single gas tests, carried out as in Example 1, gave the following results:

$CO_2$ permeability: 112 microHoehn
$CH_4$ permeability: 4 microHoehn
$CO_2/CH_4$ selectivity: 28

Example 3

Example 2 was repeated except that heating on the hot plate was extended to 5 minutes prior to quench. Dehydration conditions were the same as in Examples 1 and 2. Single and mixed gas test results are tabulated below.

| $CO_2/CH_4$ Feed Ratio | Temp. (°C) | Pressure (psig) | Permeate Rate (microHoehn) | $CO_2/CH_4$ Selectivity |
|---|---|---|---|---|
| 100/0 | 25 | 400 | 56 | -- |
| 0/100 | 25 | 400 | 2.2 | 25 |
| 50/50 | 25 | 230 | 26 | 17 |
| 80/20 | 50 | 390 | 28 | 16 |
| 80/20 | 48 | 407 | 40 | 13 |

Example 4

A membrane similar to that of Example 2 was dehydrated by submersion in n-hexane and azeotropic distillation of water using a Dean-Stark trap. When all water had been distilled, the film was removed, vacuum dried and tested for single gas permeabilities as in Example 1. Results were are follows:

$CO_2$ permeability: 112 microHoehn
$CH_4$ permeability: 4.5 microHoehn
$CO_2/CH_4$ selectivity: 25

Membranes from most polyaramides cannot be dehydrated with such nonpolar solvents as n-hexane.

Example 5

A membrane similar to that of Example 2 was dehydrated by submersion in 1,1,2-trifluoro-1,2,2-trichloroethane (FREON® 113) followed by azeotropic distillation of water using a modified Dean-Stark trap (for organic fluids heavier than water). Following vacuum drying the membrane was tested for single and mixed gas permeability and 400 psig (27.6 x $10^5$ Pa) with the following results:

| $CO_2/CH_4$ Feed Ratio | Temp. (°C) | Permeate Rate (microHoehn) | $CO_2/CH_4$ Selectivity |
|---|---|---|---|
| 100/0 | 25 | 126 | -- |
| 0/100 | 25 | 5 | 25 |
| 80/20 | 42 | 76 | 14 |

Membranes from less substituted polyaramides cannot be dehydrated with FREON® 113.

Example 6

A membrane similar to that of Example 2 was dehydrated by submersion in FREON® 113 at ambient temperatures as described for FREON® 123 in Example 1. Following vacuum drying, single gas helium (comparable to hydrogen) and methane permeabilities at 400 psig (27.6 x $10^5$ Pa) ambient temperatures were as follows:

Helium permeability: 132 microHoehn
$CH_4$ permeability: 3.3 microHoehn
$He/CH_4$ selectivity: 40

Example 7

A membrane from a copolymer of 2,4-diaminomesitylene and 2,3,5,6-tetramethyl-p-phenylene diamine (2:1) (molar or wt.) with a 70/30 mixture of isophthaloyl chloride and terephthaloyl chloride was prepared and dehydrated as described in Example 6. Single gas tests at 400 psig (27.6 x $10^5$ Pa), ambient temperature gave the following results:

| | |
|---|---|
| $CO_2$ permeability: | 120 microHoehn |
| $CH_4$ permeability: | 4 microHoehn |
| $CO_2/CH_4$ selectivity: | 30 |

Example 8

A membrane was prepared from a polyamide derived from polycondensation of 4,4-methylene-di-2,6-xylidine

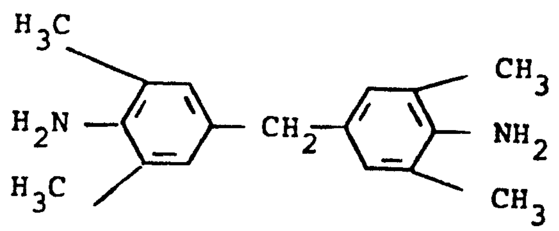

a 70/30 mixture of isophthaloyl chloride and terephthaloyl chloride. Casting and dehydration conditions were the same as in Example 6. Single gas tests at 400 psig, (27.6 x $10^5$ Pa) ambient temperatures gave the following results.

| | |
|---|---|
| $CO_2$ permeability: | 123 microHoehn |
| $CH_4$ permeability: | 5 microHoehn |
| $CO_2/CH_4$ selectivity: | 25 |

Example 9

A membrane was prepared from a 50:50 wt % physical mixture of the polymer used in Example 1 and a completely unsubstituted polyamide derived from meta-phenylenediamine and a 70/30 mixture of isophthaloyl chloride and terephthaloyl chloride. Casting and dehydration conditions were the same as in Example 6. Single gas tests at 400 psig (27.6 x $10^5$ Pa), ambient temperatures gave the following results:

$CO_2$ permeability: 110 microHoehn
$CH_4$ permeability: 3.2 microHoehn
$CO_2/CH_4$ selectivity: 34

In view of the fact that membranes from the unsubstituted polyamide alone do not dehydrate with FREON® 113, and that their permeabilities are generally low ( 5 microHoehn), the above performance of membranes from the blend was certainly unexpected.

Example 10

A copolymer was prepared by polycondensation of equimolar amounts of 2,4-diaminomesitylene and m-phenylenediamine with a 70/30 mixture. An asymmetric membrane from this copolymer was prepared and dehydrated as described in Example 1. Single gas tests at 400 psig ($27.6 \times 10^5$ Pa), ambient temperatures produced the following results:

$CO_2$ permeability: 230 microHoehn
$CH_4$ permeability: 6 microHoehn
$CO_2/CH_4$ selectivity: 38

Example 11

Asymmetric hollow fibers having outer diameter (OD) 300 micrometers and inner diameter (ID) 150 micrometers were prepared from the copolymer of Example 10. The hollow fibers were dehydrated as described in Example 1, then assembled into a module. Mixed (50/50) $CO_2/CH_4$ gas tests at 200 psig ($13.8 \times 10^5$ Pa) and 45°C produced the following results, which remained constant after 4 days of operation.

Permeate rate: 39 microHoehn
$CO_2/CH_4$ selectivity: 22

Example 12

Asymmetric hollow fibers having 225 micrometer OD and 112 micrometer ID were spun under various conditions from the copolymer of Example 10.

The hollow fibers were heated in water at 90°C for several hours, then dehydrated using the drying processes described in U.S. 4,080,743. A module containing the dehydrated fibers was tested for helium and nitrogen permeabilities (single gas tests) at 600 psig ($41.4 \times 10^5$ Pa) and 60°C with the following results:

| | |
|---|---|
| Helium permeability: | 170 microHoehn |
| Nitrogen permeability: | 1.16 microHoehn |
| $He/N_2$ selectivity: | 146 |

Example 13

Another module of the type described in Example 12 was tested at 600 psi ($41.4 \times 10^5$ Pa), 60°C using mixed $H_2/CH_4$ feed (50/50) with the following results, stable after one week:

| | |
|---|---|
| Permeate rate: | 104 microHoehn |
| $H_2/CH_4$ selectivity: | 77 |

Example 14

Another module of the type in Example 12 was tested for separation of oxygen from air at 300 psi ($21.6 \times 10^5$ Pa) and ambient temperatures with the following results:

| | |
|---|---|
| Permeate rate: | 21 microHoehn |
| $O_2/N_2$ selectivity: | 5.9 |

Example 15

An aromatic polyamide was prepared by polycondensation of diethyltoluene diamine, a mixture of 21% 3,5-diethyl-2,6-diaminotoluene and 75.5% 3,5-diethyl-2,4-diaminotoluene, 3% dialkylated m-phenylene diamine and 0.4% other trialkylated m-phenylene diamines and 0.1% other materials; and a 70/30 mixture of isophthaloyl chloride and terephthaloyl chloride. Asymmetric membranes were prepared and dehydrated as described in Example 1. Single gas tests at 400 psig ($23.4 \times 10^5$ Pa) ambient temperature produced the following results:

Helium permeability: 671 microHoehn
Nitrogen permeability: 6 microHoehn
$He/N_2$ selectivity: 112

Example 16

Another membrane of the type described in Example 15 was tested at 50 psig ($3.4 \times 10^5$ Pa), and ambient temperatures using mixed $H_2/C_4$ feed (50/50) with the following results:

Permeate rate: 525 microHoehn
$H_2/CH_4$ selectivity: 199

Claims:

1. An asymmetric polyamide membrane wherein the diamine component of at least one polyaramide component comprises an aromatic polyamide containing the repeating unit

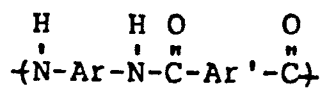

wherein -Ar- is 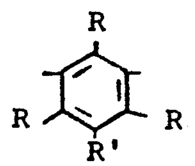 , 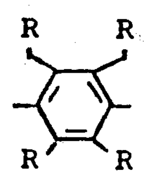

or 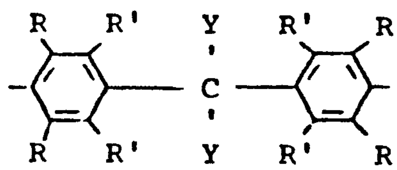 where R is alkyl of 1 to 3 carbon atoms, -R' is -R or -H, and Y- is -H, $-CH_3$ or $-CF_3$, and where -Ar'- is 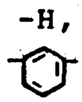 or 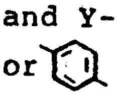 .

2. The membrane of Claim 1 consisting essentially of a polyaramide or copolyamide containing at least 40 mole % repeating units of the structure

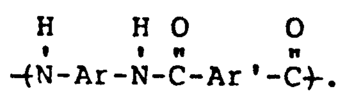.

3. The membrane of Claim 1 wherein -Ar- is 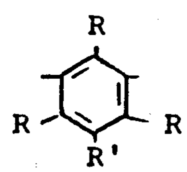 .

4. The membrane of Claim 3 wherein Ar'- is a mixture of from 50 to 80 weight % 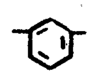 and 50 to 20 weight % 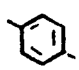 .

5471

5. The membrane of Claim 2 wherein -Ar- is

wherein -Ar- is 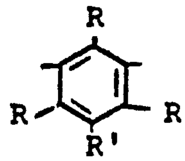 :

or 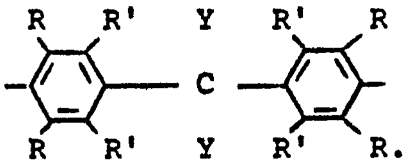

6. The membrane of Claim 5 wherein -Ar is a mixture of from 50 to 80 weight % 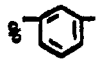 and 50 to 20 weight % 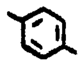 .

7. The membrane of Claim 6 wherein -Y is -H.

8. The membrane of Claim 1 consisting essentially of a blend of up to 60 weight % of an aromatic polyamide and at least 40 weight percent of a polyaramide consisting essentially of repeating units of the formula

$$-\!\!(\overset{H}{\underset{}{N}}-Ar-\overset{H}{N}-\overset{O}{\overset{\|}{C}}-Ar'-\overset{O}{\overset{\|}{C}})\!\!-.$$

9. The membrane of Claim 8 wherein

-Ar- is 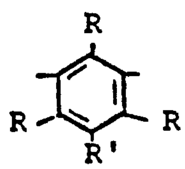 .

10. The membrane of Claim 9 wherein -Ar- is a mixture of from 50 to 80 weight % 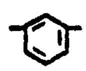 and 50 to 20 weight % 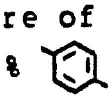 .

11. The membrane of Claim 8 wherein -Ar- is

or 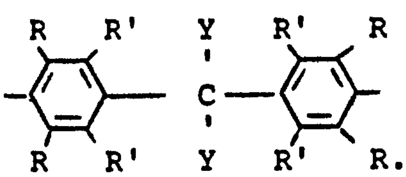

12. The membrane of Claim 11 wherein -Ar'- is a mixture of from 50 to 80 weight % 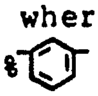 and 50 to 20 weight % 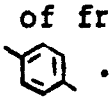 .

13. The membrane of Claim 12 wherein -Y is -H.

14. A process of separating a mixture of gases using the membrane of Claim 1.